# DEMANDE DE BREVET EUROPEEN

(11) **EP 2 532 566 A1**
(43) Date de publication de la demande: **12.12.2012**
(21) Numéro de dépôt: 12171497.6
(22) Date de dépôt: 11.06.2012
(51) Int. Cl.: B62D 7/14, B62D 7/15

(54) **Structure de direction destinée à assurer l'orientation simultanée de quatre roues directrices d'un véhicule automobile et Véhicule automobile comportant une telle structure de direction.**

(30) Priorité: 10.06.2011 FR 1155141
(71) Demandeur: Muses, 78700 Conflans Sainte Honorine (FR)
(72) Inventeur: Michel, Luc, 78740 Evecquemont (FR)
(74) Mandataire: Derambure, Christian

(57) **Abrégé**

L'invention concerne, de façon générale, le domaine technique des structures de direction appartenant aux véhicules automobiles à propulsion électrique. Plus particulièrement, l'invention se rapporte à une structure de direction (60) comportant deux rotules d'orientation avant (62AV), deux rotules d'orientation arrière (62AR), un mécanisme de transmission latérale synchrone avant (88AV), un mécanisme de transmission latérale synchrone arrière (88AR) et un boîtier de direction (70) apte à actionner les mécanismes de transmission latérale synchrone avant (88AV) et arrière (88AR) de sorte à générer l'orientation des rotules d'orientation avant (62AV) et arrière (62AR) selon les directions d'orientation (64). Pour réduire l'encombrement de cette structure de direction, l'invention prévoit que le boîtier de direction (70) comporte un corps rigide (72) creux s'étendant majoritairement selon une direction d'épanouissement (DE) qui coïncide sensiblement avec la direction longitudinale (DL), au niveau d'une zone longitudinale médiane à encombrement transversal réduit, un axe de sortie avant (84) monté mobile dans le corps rigide (72) et relié au mécanisme de transmission latérale synchrone avant (88AV) de manière à assurer, par translation dans la direction d'épanouissement (DE), l'actionnement dudit mécanisme de transmission latérale synchrone avant (88AV) et un axe de sortie arrière (86) monté mobile dans le corps rigide (72), à distance de l'axe de sortie avant (84) dans la direction d'épanouissement (DE) et relié au mécanisme de transmission latérale synchrone arrière (88AR) de manière à assurer, par translation dans la direction d'épanouissement (DE), l'actionnement dudit mécanisme de transmission latérale synchrone avant (88AV).

## Description

L'invention concerne, de façon générale, le domaine technique des structures de direction appartenant aux véhicules automobiles à propulsion électrique.

Il convient de signaler que le domaine technique des véhicules automobiles à propulsion électrique présente des particularismes non négligeables par rapport au domaine technique traditionnel de l'automobile.

Ces particularismes sont principalement liés à l'utilisation des moyens de stockage d'énergie électrique nécessaires à la propulsion du véhicule automobile. En effet, de part leur nature, ces moyens de stockage sont à la fois lourds et volumineux ce qui engendre des difficultés d'intégration au sein du véhicule et nécessite une reconfiguration des principaux éléments formant la structure de châssis et la structure de direction.

L'invention concerne, selon un premier de ses aspects, une structure de direction spécialement destinée à assurer l'orientation simultanée de roues avant et arrière appartenant à un véhicule automobile à propulsion électrique pour autoriser son déplacement le long d'une trajectoire de déplacement, comportant deux rotules d'orientation avant aptes, d'une part, à être reliées fonctionnellement aux roues avant du véhicule automobile de sorte à être disposées en regard l'une de l'autre dans une direction transversale et, d'autre part, à se déplacer en rotation de manière à orienter lesdites roues avant par rapport à une direction longitudinale perpendiculaire à la direction transversale ainsi que deux rotules d'orientation arrière aptes, d'une part, à être reliées fonctionnellement aux roues arrière du véhicule automobile de sorte à être disposées en regard l'une de l'autre dans la direction transversale et, d'autre part, à se déplacer en rotation de manière à orienter lesdites roues arrière par rapport à la direction longitudinale. La structure de direction comprend également un mécanisme de transmission latérale synchrone avant apte, d'une part, à être relié structurellement et fonctionnellement aux rotules d'orientation avant et, d'autre part, à orienter lesdites rotules d'orientation avant, de façon synchrone, selon des directions d'orientation de manière à assurer le déplacement du véhicule automobile le long de la trajectoire de déplacement ainsi qu'un mécanisme de transmission latérale synchrone arrière apte, d'une part, à être relié structurellement et fonctionnellement aux rotules d'orientation arrière et, d'autre part, à orienter lesdites rotules d'orientation arrière, de façon synchrone et selon des directions d'orientation antagonistes aux directions d'orientation des rotules d'orientation avant de manière à assurer le déplacement du véhicule automobile le long de la trajectoire de déplacement. En outre, la structure de direction intègre un boîtier de direction apte à actionner les mécanismes de transmission latérale synchrone avant et arrière de sorte à générer l'orientation des rotules d'orientation avant et arrière selon les directions d'orientation.

Une telle structure de direction est connue par l'exemple qu'en donne le document FR-A1-2 568 844 s'intéressant à un domaine technique différent qu'est celui des engins agricoles. Ce document décrit, en effet, un engin agricole équipé d'un système de direction à quatre roues directrices, comprenant un châssis, deux roues avant, deux roues arrière, un mécanisme articulé de direction interconnectant les roues avant et arrière en vue de les orienter simultanément, et un boîtier de direction. Plus particulièrement, le boîtier de direction possède un axe de sortie unique qui est utilisé pour mettre en mouvement à pivotement une barre centrale en forme de « T » capable, d'une part, d'orienter les roues avant et, d'autre part, de mettre en mouvement une tringle de liaison inclinée par rapport à l'axe central longitudinal de l'engin agricole permettant d'orienter les roues arrière.

Une telle réalisation présente plusieurs inconvénients. En premier lieu, du fait de la structure et de l'agencement du mécanisme articulé de direction, plusieurs pièces sont inclinées par rapport à la direction longitudinale de l'engin agricole et se déplacent selon un mouvement de rotation autour d'un axe géométrique vertical qui génère un débattement transversal important, notamment au niveau d'une position longitudinale médiane. Cela engendre donc un encombrement transversal qui n'est pas optimisé. En deuxième lieu, le mécanisme articulé de direction décrit dans ce document nécessite la fabrication, l'utilisation et l'assemblage d'un grand nombre de pièces mécaniques, ce qui génère des problématiques de coûts, de fiabilité, d'approvisionnement, etc. En outre, le positionnement du boîtier de direction vers l'avant de l'engin automobile génère des problématiques de sécurité significative, notamment du fait de l'effet de recul que peut subir la colonne de direction reliée à audit boîtier de direction en cas de choc frontal de l'engin automobile.

Le document GB-A-494,729 porte sur une structure de direction destinée à orienter les roues avant et arrière d'un véhicule automobile traditionnel soit de manière indépendante, soit de façon synchrone. Plus particulièrement, la structure de direction présente une paire de barres longitudinales directement connectées aux mécanismes d'orientation des roues avant et arrière respectivement. Chacune de ces barres longitudinales est capable de se déplacer en direction longitudinale sous l'impulsion de la colonne de direction pour actionner les mécanismes d'orientation des roues avant et arrière. Par ailleurs, la structure de direction est pourvue d'un mécanisme doté d'une pièce de blocage permettant, selon une première configuration, de verrouiller les barres longitudinales l'une contre l'autre pour actionner de façon synchrone les roues avant et arrière et, selon une seconde configuration, de déverrouiller ces barres longitudinales pour n'assurer que l'orientation des roues arrières. Ces barres longitudinales sont supportées par un bras relié au châssis et ces dernières ne sont donc ni protégées ni montées mobiles à l'intérieur d'un corps creux formant les contours d'un boîtier de direction. D'autre part, ces barres longitudinales s'étendent sur toute la longueur du véhicule, c'est-à-dire - pour chacune d'elles - depuis le train avant et jusqu'au train arrière. Il n'est donc pas prévu que le boîtier de direction présente un corps rigide creux dans lequel sont montés mobiles les axes d'entrée et de sortie et que le boitier de direction est positionné au sein d'une zone transversale médiane de la structure de direction.

L'état de la technique connu comprend également JP 59 092262.

Dans ce contexte, la présente invention a pour but de proposer une structure de direction exempte de l'une au moins des limitations précédemment évoquées.

A cet effet, l'invention propose une structure de direction spécialement destinée à assurer l'orientation simultanée de roues avant et arrière appartenant à un véhicule automobile à propulsion électrique en réponse à la rotation d'une colonne de direction pour autoriser son déplacement le long d'une trajectoire de déplacement, comportant :
deux rotules d'orientation avant aptes, d'une part, à être reliées fonctionnellement aux roues avant du véhicule automobile de sorte à être disposées en regard l'une de l'autre dans une direction transversale et, d'autre part, à se déplacer en rotation de manière à orienter lesdites roues avant par rapport à une direction longitudinale perpendiculaire à la direction transversale ;
deux rotules d'orientation arrière aptes, d'une part, à être reliées fonctionnellement aux roues arrière du véhicule automobile de sorte à être disposées en regard l'une de l'autre dans la direction transversale et, d'autre part, à se déplacer en rotation de manière à orienter lesdites roues arrière par rapport à la direction longitudinale ;
un mécanisme de transmission latérale synchrone avant apte, d'une part, à être relié structurellement et fonctionnellement aux rotules d'orientation avant et, d'autre part, à orienter lesdites rotules d'orientation avant, de façon synchrone, selon des directions d'orientation de manière à assurer le déplacement du véhicule automobile le long de la trajectoire de déplacement ;
un mécanisme de transmission latérale synchrone arrière apte, d'une part, à être relié structurellement et fonctionnellement aux rotules d'orientation arrière et, d'autre part, à orienter lesdites rotules d'orientation arrière, de façon synchrone et selon des directions d'orientation antagonistes aux directions d'orientation des rotules d'orientation avant de manière à assurer le déplacement du véhicule automobile le long de la trajectoire de déplacement ;
un boîtier de direction apte à actionner les mécanismes de transmission latérale synchrone avant et arrière de sorte à générer l'orientation des rotules d'orientation avant et arrière selon les directions d'orientation.

Cette structure de direction est telle que le boîtier de direction comporte, en premier lieu, un corps rigide creux s'étendant majoritairement selon une direction d'épanouissement qui coïncide sensiblement avec la direction longitudinale, au niveau d'une zone longitudinale médiane à encombrement transversal réduit, en deuxième lieu, un axe de sortie avant monté mobile dans le corps rigide et relié au mécanisme de transmission latérale synchrone avant de manière à assurer, par translation dans la direction d'épanouissement, l'actionnement dudit mécanisme de transmission latérale synchrone avant et, en troisième lieu, un axe de sortie arrière monté mobile dans le corps rigide, à distance de l'axe de sortie avant dans la direction d'épanouissement et relié au mécanisme de transmission latérale synchrone arrière de manière à assurer, par translation dans la direction d'épanouissement, l'actionnement dudit mécanisme de transmission latérale synchrone avant.

Et, le boitier de direction est positionné au sein d'une zone transversale médiane de sorte à réduire l'effet de recul de la colonne de direction sous l'effet d'un choc frontal du véhicule automobile.

L'utilisation d'un tel boîtier de direction relié simultanément aux mécanismes de transmission latérale synchrone avant et arrière favorise la réduction du nombre de pièce mécanique à utiliser pour l'orientation des roues avant et arrière du véhicule. Par ailleurs, cet agencement permet de limiter l'encombrement de la structure de direction puisque tant le corps rigide que les axes de sortie avant et arrière du boîtier de direction se contentent d'occuper une zone longitudinale médiane à encombrement transversal réduit. Il en découle que seule la zone longitudinale médiane est impactée par la présence du boîtier de direction, ce qui permet de dégager de l'espace de part et d'autre de ce boîtier de direction.

Selon une réalisation, l'axe de sortie avant et l'axe de sortie arrière sont alignés dans la direction d'épanouissement du corps rigide. Ainsi, l'encombrement transversal du boîtier de direction est limité.

Selon une réalisation, le boîtier de direction est sensiblement positionné à équidistance des rotules d'orientation avant et des rotules d'orientation arrière dans la direction longitudinale. Cela permet de renforcer la sécurité au sein du véhicule automobile puisque le positionnement du boîtier de direction au sein d'une zone transversale médiane - et non vers l'avant du véhicule automobile, comme habituellement - permet de réduire l'effet de recul de la colonne de direction susceptible d'être généré en cas de choc frontal dudit véhicule automobile.

Selon une réalisation, l'axe de sortie avant et l'axe de sortie arrière sont espacés l'un de l'autre d'une distance d'espacement comprise entre 30 % et 60 % de la distance de séparation séparant les rotules d'orientation avant et arrière dans la direction longitudinale. Un tel écartement de l'axe de sortie avant vis-à-vis de l'axe de sortie arrière permet de limiter le débattement transversal des mécanismes de transmission latérale synchrone avant et arrière et donc d'éviter qu'ils n'encombrent la zone transversale médiane de la structure de châssis.

Selon une réalisation, le boîtier de direction présente également un axe d'entrée monté mobile dans le corps rigide et apte à être relié, directement ou indirectement, à une colonne de direction appartenant au véhicule automobile de sorte que la rotation de cette colonne de direction entraîne le déplacement de l'axe d'entrée.

Dans ce cas, selon une réalisation, l'axe d'entrée est mécaniquement lié aux axes de sortie avant et arrière à l'intérieur du corps rigide de sorte qu'un déplacement de l'axe d'entrée génère un déplacement proportionnel, par translation dans la direction longitudinale DL, des axes de sortie avant et arrière. Du fait de cette configuration utilisant un unique boîtier de direction orienté dans la direction longitudinale pour orienter, via les axes de sortie avant et arrière, les rotules d'orientation avant et arrière, le nombre de pièce mécanique est restreint et l'ensemble de ces pièces peut être maintenu dans une zone longitudinale médiane à encombrement transversale réduit.

Selon une réalisation, le(s) mécanisme(s) de transmission latérale avant et/ou arrière comporte(nt) : un élément d'accouplement relié structurellement et fonctionnellement à l'axe de sortie avant et/ou arrière du boîtier de direction ; un module de renvoi latéral synchrone actionné par déplacement de l'élément d'accouplement lorsque ledit élément d'accouplement est mis en mouvement par translation, dans la direction longitudinale DL, de l'axe de sortie avant et/ou arrière du boîtier de direction ; et deux biellettes de transmission gauche et droite aptes à être reliées, respectivement, aux rotules d'orientation gauche et droite et actionnées, de façon synchrone, par le mécanisme le module de renvoi latéral synchrone.

Dans ce cas, selon une réalisation, l'élément d'accouplement comporte : une portion longitudinale inclinée par rapport à la direction longitudinale DL et reliée structurellement et fonctionnellement à l'axe de sortie avant et/ou arrière du boîtier de direction, une portion coudée prolongeant structurellement et fonctionnellement la portion longitudinale inclinée ; et une portion transversale inclinée formant bras de levier, prolongeant structurellement et fonctionnellement la portion coudée et étant accouplée au module de renvoi transversal synchrone. Cette configuration permet de convertir le déplacement de l'axe de sortie avant ou arrière par translation dans la direction longitudinale en un déplacement en rotation facilitant l'orientation des rotules d'orientation avant ou arrière.

Dans ce cas, selon une réalisation, les portions longitudinales inclinées des éléments d'accouplement appartenant aux mécanismes de transmission latérale synchrone avant et arrière s'étendent de part et d'autre du boîtier de direction par rapport par rapport à un plan vertical médian orienté selon la direction longitudinale.

Selon une réalisation alternative, les portions longitudinales inclinées des éléments d'accouplement appartenant aux mécanismes de transmission latérale synchrone avant et arrière s'étendent du même coté du boîtier de direction par rapport par rapport à un plan vertical médian orienté selon la direction longitudinale.

Selon une réalisation, les mécanismes de transmission latérale synchrone avant et arrière présentent une symétrie de structure et/ou de fonctionnement.

Selon une réalisation, le mécanisme de transmission latérale synchrone avant et/ou arrière comporte, en outre, un renvoi mécaniquement variable ou hydrauliquement variable de manière à adapter les directions d'orientation des rotules d'orientation selon des lois prédéterminées.

Selon une réalisation, les rotules d'orientation avant et arrière et/ou les mécanismes de transmission latérale synchrone avant et arrière sont réalisés à partir de pièces mécaniques identiques ou similaires.

Selon une réalisation alternative, le mécanisme de transmission latérale synchrone avant est différent du mécanisme de transmission latérale synchrone arrière de sorte à obtenir des directions d'orientation des rotules de direction avant différents des directions d'orientation des rotules de direction arrière.

L'invention se rapporte également à un véhicule automobile à propulsion électrique comportant une structure de châssis et une structure de direction selon l'invention, dans lequel le boîtier de direction est fixé à demeure sur la structure de châssis et orienté de sorte que la direction d'épanouissement du corps rigide coïncide sensiblement avec la direction longitudinale de la structure de châssis.

Selon une réalisation, la structure de châssis comporte alors : un train avant et un train arrière s'étendant dans une direction transversale sensiblement perpendiculaire à la direction longitudinale ; des moyens de rigidification, formés par une poutre centrale creuse, qui relie structurellement et fonctionnellement le train avant au train arrière de manière à assurer la rigidité de la structure de châssis et à supporter la majeure partie des contraintes de séparation des trains avant et arrière du véhicule ; le boîtier de direction étant supporté directement ou indirectement par ladite poutre centrale creuse formant les moyens de rigidification.

Dans ce cas, selon une réalisation, la poutre centrale creuse définit un espace intérieur protégé à l'intérieur duquel est supporté et protégé le boîtier de direction.

Ainsi, le gain de place obtenu grâce à la mise en oeuvre de la structure de direction selon l'invention est optimisé par l'intégration d'une partie des éléments formant la structure de direction à l'intérieure de ladite poutre centrale creuse. Cela facilite, notamment, l'intégration des structures de réception dans la structure de châssis en vue d'y intégrer les module de stockage d'énergie électrique.

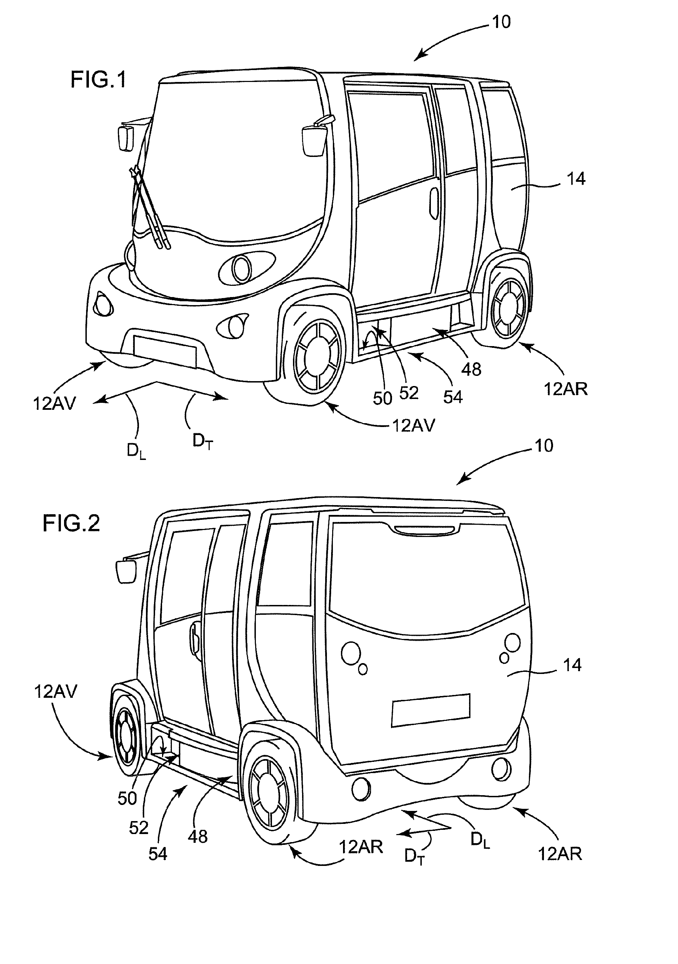

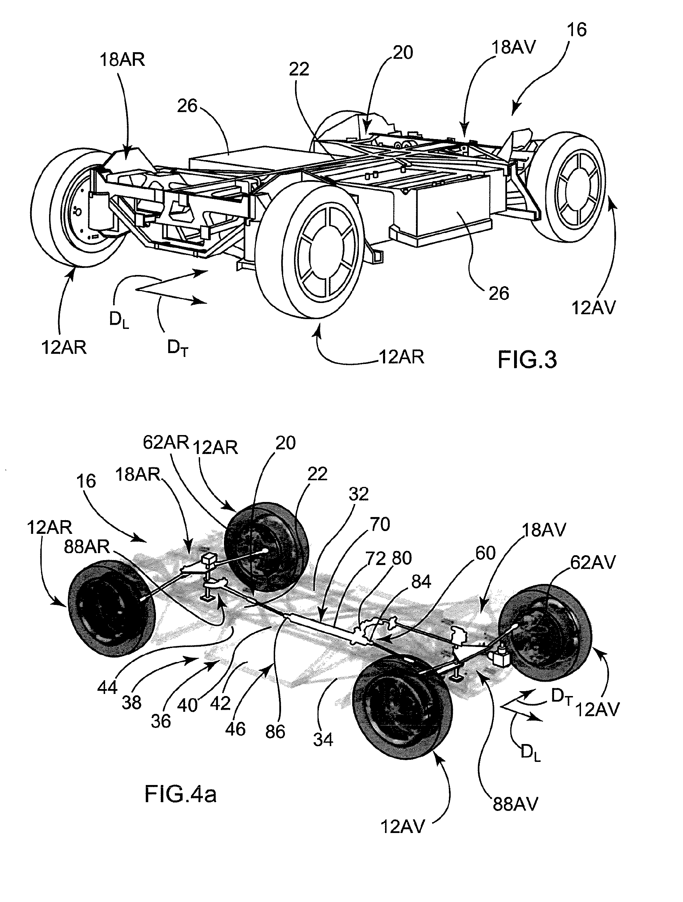

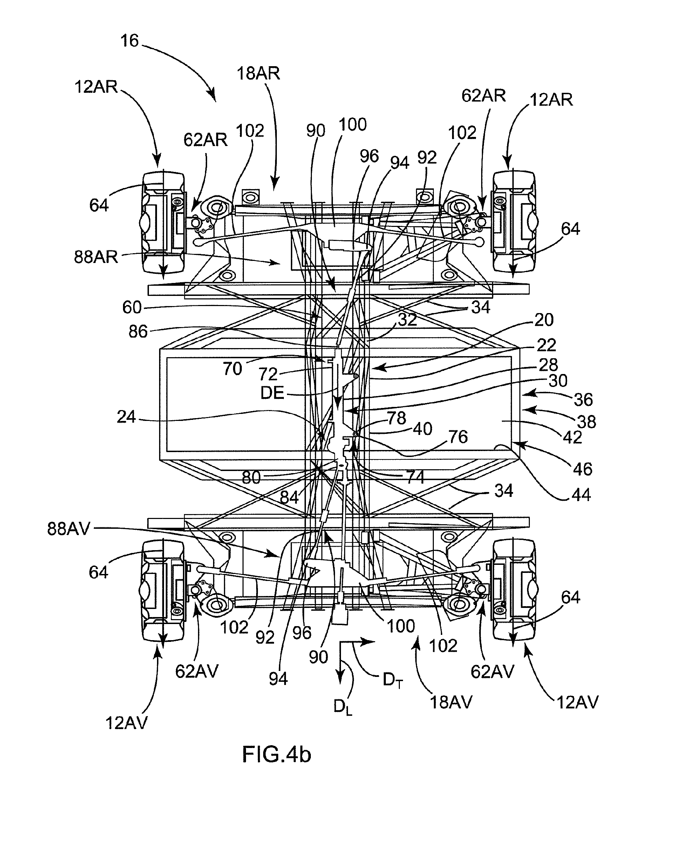

D'autres caractéristiques et avantages de l'invention ressortiront clairement de la description qui en est faite ci-après, à titre indicatif et nullement limitatif, en référence aux dessins annexés, dans lesquels :
■ La figure 1 est une vue d'ensemble générale, en perspective trois quart avant, d'un véhicule automobile à énergie électrique présentant une structure de châssis selon l'invention ;
■ La figure 2 est une vue d'ensemble générale, en perspective trois quart arrière, du véhicule automobile à énergie électrique de la figure 1 ;
■La figure 3 est une vue de détail, en perspective, d'un mode de réalisation de la structure de châssis appartenant au véhicule automobile de la figure 1, supportant deux modules de stockage d'énergie électrique ;
■ La figure 4a est une vue de détail, en perspective, d'un mode de réalisation de la structure de direction selon l'invention supportée, via une structure de châssis, par les roues avant et arrière d'un véhicule automobile ; et
■La figure 4b est une vue de détail, en vue de dessus, d'un mode de réalisation de la structure de châssis selon l'invention et tel qu'illustré par la figure 4a supportée, via une structure de châssis, par les roues avant et arrière d'un véhicule automobile.

L'invention se rapporte à un véhicule automobile 10 à énergie électrique, c'est-à-dire un véhicule automobile 10 dont la propulsion est assurée en majeure partie grâce à de l'énergie électrique. Bien entendu, cette formulation n'est pas exclusive de formes de réalisation utilisant, dans une faible mesure, d'autres sources d'énergie pour assurer sa propulsion et/ou le fonctionnement de différents types de modules fonctionnels embarqués.

D'autre part, l'expression de véhicule automobile 10 à énergie électrique doit s'entendre dans son acceptation la plus large et peut, à cet égard, concerner tout type de véhicule terrestre à roues propulsé par au moins un moteur électrique autonome embarqué et capable de transporter, sur route ouverte et dans des conditions standards de déplacement un conducteur ainsi qu'un ou plusieurs passagers et/ou une ou plusieurs marchandises.

Un tel véhicule automobile 10 est représenté à titre exemplatif et non limitatif sur les figures 1 et 2.

Ce véhicule automobile 10 est capable de se déplacer sur route selon une trajectoire de déplacement et comporte deux roues avant 12AV et deux roues arrière 12AR permettant de faire l'interface entre le véhicule automobile 10 et la route.

Ce véhicule automobile 10 présente également un habitacle 14 permettant de recevoir, d'une part, le conducteur et, d'autre part, les passagers et/ou les marchandises transportées par le véhicule automobile 10. L'habitacle 14 abrite ainsi des commandes de pilotage et des commandes de gestion des environnements intérieur et extérieur du véhicule automobile 10.

Ledit véhicule automobile 10 comporte, en outre, une structure de châssis 16 reliée à rotation aux roues avant 12AV et arrière 12AR du véhicule automobile 10. De cette façon, l'habitacle 14 repose et est maintenu à demeure sur la structure de châssis 16 qui est, elle-même, supportée à l'horizontal par les roues avant 12AV et arrière 12AR du véhicule automobile 10.

Une réalisation de la structure de châssis 16 selon l'invention est représentée sur la figure 3.

Plus particulièrement, la structure de châssis 16 présente un train avant 18AV et un train arrière 18AR s'étendant tous deux dans une direction transversale DT sensiblement horizontale et perpendiculaire à une direction longitudinale DL.

Il convient d'entendre par train avant 18AV et train arrière 18AR, l'ensemble des organes mécaniques formant respectivement les parties avant et arrière de le structure de châssis 16 et permettant d'assurer, d'une part, la liaison de cette structure de châssis 16 avec les roues avant 12AV et arrière 12AR et, d'autre part, la liaison des roues avant 12AV et arrière 12AR entre-elles.

Le train avant 18AV est relié à rotation aux deux roues avant 12AV et le train arrière 18AR est relié à rotation aux deux roues arrière 12AR de sorte que les roues avant 12AV et arrière 12AR sont à même de tourner autour d'un axe géométrique horizontal pour assurer le déplacement du véhicule automobile 10.

Compte-tenu de l'agencement respectif des trains avant 18AV et arrière 18AR vis-à-vis des roues avant 12AV et arrière 12AR, la structure de châssis 16 est supportée par les roues avant 12AV et arrière 12AR en mode normal de fonctionnement.

La structure de châssis 16 comporte en outre des moyens formant rigidification 20 aptes à relier structurellement et fonctionnellement le train avant 18AV au train arrière 18AR de manière à assurer la rigidité de la structure de châssis 16. En effet, il importe que la structure de châssis 16 assure une liaison structurelle et fonctionnelle suffisante entre le train avant 18AV et le train arrière 18AR pour que ladite structure de châssis 16 forme une unité compacte, indissociable et rigide malgré les contraintes importantes susceptibles de s'appliquer sur l'un ou l'autres des trains avant 18AR et arrière 18AR lors de l'utilisation du véhicule automobile 10.

Selon le mode de réalisation des figures 4a et 4b, les moyens de rigidification 20 sont formés par une poutre centrale creuse 22 qui relie le train avant 18AV au train arrière 18AR de manière structurelle et fonctionnelle afin d'assurer la rigidité de la structure de châssis 16 et de supporter la majeure partie des contraintes de séparation des trains avant 18AR et arrière 18AR du véhicule automobile 10. En premier lieu, il convient de souligner que la poutre centrale creuse 22 s'étend entre le train avant 18AV et le train arrière 18AR dans une direction sensiblement horizontale et orientée selon la direction longitudinale DL. En deuxième lieu, il est à noter cette poutre centrale creuse 22 s'étend dans une zone longitudinale médiane à encombrement transversal réduit de ladite structure de châssis 16.

Il convient d'entendre par « zone longitudinale médiane à encombrement transversal réduit » une zone présentant une largeur, dans la direction transversale DT, suffisamment faible par rapport à la largeur totale de la structure de châssis 16 dans cette même direction transversale DT pour assurer la mise en place, au sein de la structure de châssis 16, de part et d'autre de la poutre centrale creuse 22, de moyens de stockage (non représentés) d'énergie électrique présentant des dimensions et donc une capacité de stockage suffisante pour assurer la propulsion du véhicule automobile 10. À titre exemplatif et nullement limitatif, il convient de noter que la capacité de stockage des moyens de stockage d'énergie électrique est généralement supérieure ou égale à 5 kilowatt-heures (kWh), ce qui représente un poids d'environ 200 kg.

Il est d'ailleurs préférable que cette zone longitudinale médiane à encombrement transversal réduit présente une largeur suffisamment faible pour que les modules de stockage 26 d'énergie électrique puissent être mis en place sans déborder, en hauteur ou dans la direction transversale DT, de la structure de châssis 16.

L'utilisation de la poutre centrale creuse 22 permet d'éviter l'emploi de renforts de rigidification s'étendant latéralement entre les extrémités des trains avant 18AV et arrière 18AR et, ainsi, de faciliter l'accès et l'intégration des modules de stockage 26 d'énergie électrique à proximité du centre de gravité du véhicule automobile 10. De cette façon, le poids de ces modules de stockage 26 n'influence pas de manière préjudiciable le comportement du véhicule automobile 10 sur route et l'encombrement de ces modules de stockage 26 vis-à-vis de l'habitacle 14 est considérablement limité.

La poutre centrale creuse 22 définit, par ailleurs, un espace intérieur protégé 28 à l'intérieur duquel peut être supporté et protégé un ou plusieurs organe(s) fonctionnel(s) de transmission tel qu'une structure de direction selon l'invention (décrite ultérieurement). Les organes fonctionnels de transmission peuvent alors être reliés soit à l'un ou l'autre des trains avant 18AV et arrière 18AR soit à l'un et l'autre des trains avant 18AV et arrière 18AR du véhicule automobile 10.

Ainsi, la poutre centrale creuse 22 permet-elle non seulement d'assurer la rigidité de la structure de châssis 16 mais éventuellement, aussi, de supporter et de protéger l'ensemble des organes de transmission susceptibles d'être reliés aux trains avant 18AV et/ou arrière 18AR du véhicule automobile 10. Cette organisation est facile à mettre en place et participe à limiter l'encombrement au sein de la structure de châssis 16.

Pour obtenir un tel espace intérieur protégé 28, la poutre centrale creuse 22 présente une partie de structure périphérique 32 en forme de treillis et définissant les contours de l'espace intérieur protégé 28. Il est pertinent d'utiliser une telle structure en forme de treillis puisque, d'une part, cela permet de faciliter l'accès à l'espace intérieur protégé 32 tout en assurant un degré de protection des organes fonctionnels de transmission et que, d'autre part, cela allège considérablement la structure de châssis 16. Toutefois, selon une réalisation alternative (non représentée), il serait également possible d'obtenir un tel espace intérieur protégé 28 en réalisant une poutre centrale creuse 22 présentant une partie de structure périphérique 32 en forme de profilé ouvert ou fermé. Afin d'équilibrer le poids d'une telle structure périphérique 32, il peut d'ailleurs être envisagé de réaliser ledit profilé ouvert ou fermé en matériau composite ou bien en métal.

Il convient de noter que les organe(s) fonctionnel(s) de transmission susceptibles d'être supporté(s) et protégé(s) par la poutre centrale creuse 22 peut/peuvent être de natures diverses. En effet, il peut s'agir d'uns structure de direction telle que décrite ci-après et permettant d'assurer l'orientation des roues avant 12AV et arrière 12AR du véhicule automobile 10. Chaque roue avant 12AV et arrière 12AR peut alors, par exemple, être actionnée par l'intermédiaire d'un moteur indépendant. Les moteurs indépendants peuvent en outre se trouver alimentés en énergie électrique par les modules de stockage 26 d'énergie électrique via des organes fonctionnels de conduction d'énergie électrique reliant ces moteurs indépendants aux modules de stockage 26 d'énergie électrique.

Mais les organe(s) fonctionnel(s) de transmission susceptible(s) d'être supporté(s) et protégé(s) par la poutre centrale creuse 22 peut/peuvent être également ou alternativement être choisi(s) parmi : un organe fonctionnel de propulsion destiné à assurer la propulsion des roues avant 12AV et/ou arrière 12AR du véhicule automobile 10, un organe fonctionnel de conduction d'énergie électrique permettant d'alimenter tout composant, un organe fonctionnel de transmission de liquide, etc. Ces organe(s) fonctionnel(s) de transmission peut/peuvent être seulement en partie supporté(s) et protégé(s) à l'intérieur de l'espace intérieur protégé 28.

Par ailleurs, même si la structure de châssis 16 selon l'invention use en premier lieu de la poutre centrale creuse 22 comme moyen de rigidification 20, il peut également être fait appel à des éléments de renfort complémentaires 34 n'entravant pas l'accès aux modules de stockage 26 et assurant à titre secondaire la rigidité de la structure de châssis 16.

Comme représenté sur les figures 4a et 4b à titre exemplatif et nullement limitatif, les éléments de renfort complémentaires 34 peuvent ainsi relier la poutre centrale creuse 22 aux trains avant 18AV et arrière 18AR de manière à améliorer la rigidité de la structure de châssis 16. Mais les éléments de renfort complémentaires 34 peuvent également comprendre d'autres éléments de renfort complémentaires 34 reliant la poutre centrale creuse 22 à deux structures de réception (décrites ultérieurement) permettant de recevoir les deux modules de stockage 26 d'énergie électrique, de manière à améliorer la rigidité de la structure de châssis 16.

La structure de châssis 16 selon l'invention comporte également des moyens formant réceptacle 36.

Comme l'illustrent les figures 4a et 4b sur lesquelles les moyens de stockage 26 d'énergie électrique ne sont pas représentés, les moyens formant réceptacle 36 sont agencés entre le train avant 18AV et le train arrière 18AR.

Ces moyens formant réceptacle 36 sont capables de recevoir et de supporter un système de stockage d'énergie électrique permettant d'approvisionner le véhicule automobile 10 en énergie électrique en quantité suffisante pour assurer sa propulsion. Plus précisément, les moyens formant réceptacle 36 selon l'invention comprennent deux structures de réception 38 aptes à recevoir et à supporter, chacune, un module de stockage 26 d'énergie électrique.

Chaque structure de réception 28 est disposée dans l'espace défini entre le train avant 18AV, le train arrière 18AR et la poutre centrale creuse 22. Grâce à la géométrie de la structure de châssis 16, cet espace présente des dimensions optimisées, ce qui permet d'assurer l'intégration de structures de réception 28 ayant une capacité de réception suffisante pour l'intégration de modules de stockage 26 d'énergie électrique destinés à assurer la propulsion du véhicule automobile 10.

Plus précisément, les deux structures de réception 38 se font face et sont disposées de part et d'autre de la poutre centrale creuse 22. Ainsi, ces deux structures de réception 38 autorisent la réception des modules de stockage 26 d'énergie électrique à proximité du centre de gravité de la structure de châssis 16. D'autre part, le fait de positionner les deux structures de réception 38 de cette manière limite l'encombrement des moyens formant réceptacle 36 tout en assurant un accès optimisé aux modules de stockage 26 d'énergie, ce qui facilite leur manutention. En outre, l'intérêt d'utiliser des structures de réception 38 agencées de part et d'autre de la poutre centrale creuse 22 à encombrement transversal réduit consiste à rapprocher les modules de stockage 26 d'énergie électrique du centre de gravité du véhicule automobile 10 et donc à éviter que le poids de ces modules de stockage 26 n'influence de manière préjudiciable le comportement du véhicule automobile 10 sur route.

Chacune des deux structures de réception 38 comporte une butée de réception 40 formée par la poutre centrale creuse 22, ce qui empêche le déplacement transversal du module de stockage 26 d'énergie électrique vers le centre de gravité de la structure châssis 16 lorsque ce dernier est, par exemple, soumis aux forces de déplacement résultant de l'accélération du véhicule automobile 10. En cela, la poutre centrale creuse 22 assure - via la butée de réception 40 - la protection des organes fonctionnels de transmission 30 placés dans de l'espace intérieur protégé 28.

D'autre part, chaque structure de réception 38 présente une structure formant support horizontal 42 s'étendant horizontalement depuis la poutre centrale creuse 22 et sans dépassement transversal vis-à-vis des roues avant 12AV et arrière 12AR du véhicule automobile 10. Ladite structure formant support horizontal 42 est aménagée et agencée de manière à permettre le support de l'un ou l'autre des modules de stockage 26 d'énergie électrique.

Chaque structure de réception 38 comporte également deux parois latérales 44 s'étendant sensiblement dans la direction transversale DT depuis la poutre centrale creuse 22 de part et d'autre de la structure formant support horizontal 42. De cette façon, lesdites parois latérales 44 permettent de faciliter la mise en place et de maintenir fermement en position le module de stockage 26 d'énergie électrique dans la direction longitudinale DL et d'annihiler tout risque d'éjection vers les trains avant 18AV ou arrière 18AR du véhicule automobile 10.

Selon une réalisation différente de celle qui est représentée sur les figures 4a et 4b, lesdites parois latérales 44 peuvent en fait correspondre à des éléments de butée (non représentés) assurant de façon similaire la mise en place et le maintien en position du module de stockage 26 d'énergie électrique à l'intérieur de la structure de réception 38 correspondante.

Chaque structure de réception 38 présente également une ouverture d'introduction et d'extraction 46 agencée entre les deux parois latérales 44 et en regard de la poutre centrale creuse 22 de manière à autoriser l'introduction et l'extraction, par coulissement dans la direction transversale, du module de stockage 26 d'énergie électrique correspondant depuis l'extérieur de la structure de châssis 16. Une telle disposition permet de faciliter la manutention des objets lourds que sont ces modules de stockage 26 d'énergie électrique.

Il convient de noter que chaque structure de réception 38 est apte à recevoir un module de stockage 26 d'énergie électrique permettant d'assurer la propulsion du véhicule automobile 10 sur une durée et/ou une distance satisfaisante. Toutefois, chaque structure de réception 38 peut être réalisée de manière à réceptionner également un ou plusieurs module(s) fonctionnel(s) complémentaire(s) assurant le fonctionnement du véhicule automobile 10 ou des équipements de ce véhicule automobile 10.

À cet égard, chaque structure de réception 38 peut également permettre la réception d'un module de régulation, d'un module de contrôle, d'un module de sécurité ou de protection antivol, d'un module d'éclairage intérieur ou extérieur, d'un module d'allumage, d'un module d'activation des essuie-glaces, d'un module d'activation de fermeture centralisée, d'un module de commande et d'éclairage du tableau de bord, d'un module de régulation thermique, et/ou d'un module de stockage complémentaire d'énergie électrique apte à approvisionner en énergie électrique un ou plusieurs composant(s) électronique(s) du véhicule automobile et analogue.

Selon une réalisation, chacune des deux structures de réception 38 est, en outre, associée à un élément obturateur amovible 48 pouvant être manipulé et déplacé manuellement ou de manière automatique afin d'autoriser l'introduction du module de stockage 26 d'énergie électrique correspondant au travers de l'ouverture d'introduction et d'extraction 46.

Plus précisément, l'élément obturateur amovible 48 est apte à être placé dans une position fermée dans laquelle il empêche l'extraction transversale, par coulissement, du module de stockage 26 au travers de l'ouverture d'introduction et d'extraction. L'élément obturateur amovible 48 est également apte à être déplacé jusqu'à une position ouverte dans laquelle il autorise l'introduction et l'extraction transversale, par coulissement, du module de stockage 26 au travers de l'ouverture d'introduction et d'extraction 46.

Selon la réalisation représentée sur les figures 1 et 2, l'élément obturateur amovible 48 présente, en position fermée, une portion formant surface d'appui verticale 50 au-dessus laquelle est aménagé un volume libre de tout obstacle 52 de sorte à former un marchepied 54 permettant de faciliter l'accès à un utilisateur à l'intérieur de l'habitacle du véhicule automobile 10.

Ainsi, la montée du passager dans l'habitacle 14, surélevé au dessus de la structure de châssis 16 selon l'invention, est facilitée grâce à la présence de ce marchepied 54.

Il convient par ailleurs de souligner que, selon la réalisation des figures 4a et 4b, les deux structures de réception 38 sont agencées en regard l'une de l'autre mais que chacune de structures de réception 38 ne remplit pas nécessairement tout l'espace définit entre le train avant 18AV, le train arrière 18AR et la poutre centrale creuse 22. Une telle disposition permet d'aménager entre les structures de réception 38 et les trains avant 18AV ou arrière 18AR des espaces secondaires dans lesquels peuvent être introduits d'autres modules fonctionnels destinés à assurer le fonctionnement des équipements du véhicule automobile 10.

Ces modules fonctionnels peuvent, comme précédemment, correspondre à un module de régulation, un module de contrôle, un module de sécurité ou de protection antivol, un module d'éclairage intérieur ou extérieur, un module d'allumage, un module d'activation des essuie-glaces, un module d'activation de fermeture centralisée, un module de commande et d'éclairage du tableau de bord, un module de régulation thermique, et/ou un module de stockage 26 complémentaire d'énergie électrique apte à approvisionner en énergie électrique un ou plusieurs composant(s) électronique(s) du véhicule automobile et analogue.

Toutefois, selon une réalisation alternative non représentée, les structures de réception 38 peuvent également se trouver décalées l'une par rapport à l'autre, dans la direction longitudinale. De cette façon, les espaces secondaires aménagés entre les structures de réception 38 et les trains avant 18AV ou arrière 18AR présentent des dimensions plus importantes et permettent donc de contenir des modules fonctionnels plus encombrants lorsque cela s'avère nécessaire.

Selon l'invention, le véhicule automobile 10 comporte également une structure de direction 60.

Cette structure de direction 60 est destinée à assurer l'orientation simultanée des deux roues avant 12AV et des deux roues arrière 12AR afin de faciliter le déplacement du véhicule automobile 10 le long de la trajectoire de déplacement du véhicule automobile 10 même lorsque cette dernière est fortement incurvée.

Pour ce faire, la structure de direction 60 comporte deux rotules d'orientation avant 62AV reliées fonctionnellement aux roues avant 12AV ainsi que deux rotules d'orientation arrière 62AR reliées fonctionnellement aux roues arrière 12AR.

Ces rotules d'orientation avant 62AV et arrière 62AR font office d'interface mécanique entre les roues avant 12AV et arrière 12AR, d'une part, et les trains avant 18AV et arrière 18AR de la structure de châssis 16, d'autre part. Ainsi, les rotules d'orientation avant 62AV, d'une part, et les rotules d'orientation arrière 62AR, d'autre part, se font-elles face dans la direction transversale DT. Par ailleurs, chaque rotule d'orientation 62AV, 62AR permet d'autoriser l'orientation de la roue 12AV, 12AR correspondante selon une direction d'orientation 64 qui lui est propre. De cette façon, il est ainsi possible de définir un angle de braquage α entre la direction longitudinale DL du véhicule automobile 10 et la direction d'orientation 64 de chaque roue 12AV, 12AR.

Selon une réalisation, les rotules d'orientation avant 62AV et arrière 62AR sont réalisées à partir de pièces mécaniques identiques ou similaires de manière à limiter les coûts de production de la structure de direction 60.

La structure de direction 60 présente, en outre, un boîtier de direction 70.

Ce boîtier de direction 70 comporte un corps rigide 72 creux s'étendant majoritairement selon une direction d'épanouissement DE sensiblement rectiligne. Le corps rigide 72 est agencé au sein de la structure de direction 60 de sorte que la direction d'épanouissement DE coïncide sensiblement avec la direction longitudinale. Par ailleurs, le corps rigide 72 est positionné au sein de cette structure de direction à l'intérieur d'une zone longitudinale médiane, c'est-à-dire sensiblement à équidistance des rotules d'orientation avant et 62AV et arrière 62AR dans la direction transversale.

Le corps rigide 72 peut être positionné vis-à-vis de la structure de châssis 16 à différentes positions dans la direction longitudinale DL.

Toutefois, selon une réalisation, ce corps rigide 72 est positionné entre les trains avant 18AV et arrière 18AR de la structure de châssis 16 et, si possible, au sein d'une zone transversale médiane de sorte que le boîtier de direction 70 se trouve sensiblement à équidistance des rotules d'orientation avant 62AV et des rotules d'orientation arrière 62AR dans la direction longitudinale DL.

La sécurité au sein du véhicule automobile 10 est ainsi renforcée puisque le positionnement du boîtier de direction 70 au sein de la zone transversale médiane - et non vers l'avant du véhicule automobile 10, comme habituellement - permet de réduire de manière significative l'effet de recul de la colonne de direction susceptible d'être généré en cas de choc frontal dudit véhicule automobile 10.

Le boîtier de direction 70 comporte également des moyens de fixation 74 permettant de fixer le corps rigide 72 à demeure sur un élément de support du véhicule automobile 10. Ces moyens de fixations 74 peuvent soit faire partie intégrante soit être structurellement distinct du corps rigide 70.

Selon l'invention, la direction d'épanouissement DE du corps rigide 72 coïncide sensiblement avec la direction longitudinale DL du véhicule automobile 10.

Pour ce faire, les moyens de fixation 74 sont agencés de manière à autoriser la mise en place et le maintien en position du corps rigide 72 sur le véhicule automobile 10 et tout en étant orienté dans la direction longitudinale DL. Puisque le corps creux 72 s'étend majoritairement dans la direction d'épanouissement DE et que cette direction d'épanouissement DE coïncide sensiblement avec la direction longitudinale DL, l'encombrement du boîtier de direction 70 est restreint à une zone d'encombrement transversal réduit 24, c'est-à-dire que l'encombrement de ce boîtier de direction 70 dans la direction transversale DT est particulièrement limitée.

Selon les réalisations des figures 4a et 4b, les moyens de fixation 74 sont composés de deux pattes de fixation 76 s'étendant depuis le corps rigide 72 et présentant chacune un orifice 78 pour assurer - par visserie, boulonnerie, ou analogue - le maintien en position de la patte de fixation 74 et, partant, du corps rigide 72 sur l'élément de support du véhicule automobile 10.

Selon cette réalisation, les pattes de fixation 76 sont agencées d'un coté du corps rigide 72 mais il serait également possible qu'elles soient disposées de part et d'autre dudit corps rigide 72. En outre, ces pattes de fixations 76 et/ou ces orifices 78 pourraient être remplacés par tout autre moyen de fixation 74 permettant d'assurer le maintien à demeure du corps rigide 72 sur l'élément de support du véhicule automobile 10. Il en est ainsi du soudage, du collage, de l'assemblage isostatique, etc.

Le boîtier de direction 70 présente également un axe d'entrée 80 apte à être relié, directement ou indirectement, à une colonne de direction appartenant au véhicule automobile 10 de sorte que la rotation de cette colonne de direction entraîne le déplacement de l'axe d'entrée 80 et, ainsi, l'activation du boîtier de direction 70.

Ce déplacement de l'arbre d'entrée peut correspondre soit à un déplacement en rotation, soit à un déplacement en translation selon le moyen de liaison mécanique reliant la colonne de direction du véhicule automobile 10 à l'axe d'entrée 80 du boîtier de direction 70.

Le boîtier de direction 70 présente également un axe de sortie avant 84 monté mobile à l'intérieur du corps rigide 72 et pouvant se déplacer dans la direction d'épanouissement de ce corps rigide 72 sous l'impulsion de l'axe d'entrée 80. Plus particulièrement, l'axe de sortie avant 84 est lié mécaniquement à l'arbre d'entrée 80 de sorte qu'un déplacement de cet arbre d'entrée 80 génère un déplacement proportionné de l'axe de sortie avant 84 dans la direction d'épanouissement du corps rigide 72.

Le boîtier de direction 70 présente, de manière similaire ou équivalente, un axe de sortie arrière 86 également monté mobile à l'intérieur du corps rigide 72 du boîtier de direction 70, à distance de l'axe de sortie avant 84. Cet axe de sortie arrière 86 peut se déplacer dans la direction d'épanouissement DE du corps rigide 72 sous l'impulsion de l'axe d'entrée 80 et, comme précédemment, l'axe de sortie arrière 86 est alors en prise mécanique avec l'arbre d'entrée 80 de sorte qu'un déplacement de cet arbre d'entrée 80 génère un déplacement proportionné de l'axe de sortie arrière 86.

En d'autres termes, l'axe d'entrée 80 est mécaniquement lié aux axes de sortie avant 84 et arrière 86 à l'intérieur du corps rigide 72 de sorte qu'un déplacement de l'axe d'entrée 80 génère un déplacement proportionnel, par translation dans la direction longitudinale DL, des axes de sortie avant 84 et arrière 86.

Cet agencement dans lequel la colonne de direction du véhicule automobile 10 est relié à l'axe d'entrée 80 du boîtier de direction 70, lequel assure le déplacement simultané des rotules de rotation avant 62AV et arrière 62AR permet de limiter le nombre de pièce mécanique utile à l'orientation des roues avant 12AV et arrière 12AR du véhicule automobile 10. Par ailleurs, comme indiqué précédemment, le fait que l'axe de sortie avant 84 et l'axe de sortie arrière 86 se déplacent dans la direction d'épanouissement DE permet de limiter l'encombrement dans la direction transversale DT généré par l'actionnement du boîtier de direction 70. Cela permet aussi de limiter l'espace nécessaire pour l'intégration de la structure de direction 60 à une zone longitudinale médiane à encombrement transversal réduit 24.

À cet égard, selon une réalisation avantageuse, l'axe de sortie avant 84 et l'axe de sortie arrière 86 sont alignés dans la direction longitudinale DL de manière à réduire au minimum cet encombrement latéral.

La structure de direction 60 comporte un mécanisme de transmission latérale synchrone avant 88AV.

Ce mécanisme de transmission latérale synchrone avant 88AV est relié structurellement et fonctionnellement aux deux rotules d'orientation avant 62AV. Il permet d'orienter lesdites rotules d'orientation avant 62AV, de façon synchrone et selon des directions d'orientation 64 permettant d'assurer le déplacement du véhicule automobile 10 le long de la trajectoire de déplacement.

Plus particulièrement, selon l'invention le mécanisme de transmission latérale synchrone avant 88AV est relié à l'axe de sortie avant 84 afin que le déplacement de cet axe de sortie avant 84, par translation dans la direction d'épanouissement DE du corps rigide 72, actionne le mécanisme de transmission latérale synchrone et génère le déplacement des rotules d'orientations avant 62AV dans les directions d'orientation 64 correspondantes.

Les directions d'orientation 64 des deux rotules d'orientations avant 62AV ne sont d'ailleurs pas forcément identiques. En effet, selon une réalisation, le mécanisme de transmission latérale synchrone avant 88AV est agencé pour que, sous l'impulsion de l'axe de sortie avant 84, soit généré un déplacement de la rotule d'orientation avant 62AV suivant la courbe intérieure de la trajectoire de déplacement jusqu'à une direction d'orientation 64 présentant un angle de braquage α plus important que celui de la direction d'orientation 64 de la rotule d'orientation avant 62AV suivant la courbe extérieure de la trajectoire de déplacement.

Cette réalisation permet satisfaire, au mieux, les conditions de l'épure de Jeantaud selon lesquelles lorsque le véhicule automobile 10 se déplace selon une trajectoire de déplacement courbée, les roues avant 12AV suivent des tangentes de cercles dont les centres se confondent.

La structure de direction 60 comporte un mécanisme de transmission latérale synchrone arrière 88AR.

Ce mécanisme de transmission latérale synchrone arrière 88AR est, de façon similaire, relié structurellement et fonctionnellement aux deux rotules d'orientation arrière 62AR. Il permet ainsi d'orienter lesdites rotules d'orientation arrière 62AR, de façon synchrone et selon des directions d'orientation 64 antagoniste par rapport aux directions d'orientation 64 des rotules d'orientation avant 62AV.

De la même façon que précédemment, selon l'invention le mécanisme de transmission latérale synchrone arrière 88AR est relié à l'axe de sortie arrière 86 afin que le déplacement de cet axe de sortie arrière 86, par translation dans la direction d'épanouissement DE du corps rigide 72, actionne le mécanisme de transmission latérale synchrone arrière 88AR et génère le déplacement des rotules d'orientation arrière 62AV dans les directions d'orientation 64 correspondantes.

Comme précédemment, les directions d'orientation 64 des deux rotules d'orientations arrière 62AR ne sont pas nécessairement identiques et le mécanisme de transmission latérale synchrone arrière 88AR est, selon une réalisation, agencé pour que, sous l'impulsion de l'axe de sortie avant 84, soit généré un déplacement de la rotule d'orientation arrière 62AR suivant la courbe intérieure de la trajectoire de déplacement jusqu'à une direction d'orientation 64 présentant un angle de braquage α plus important que celui de la direction d'orientation 64 de la rotule d'orientation arrière 62AR suivant la courbe extérieure de la trajectoire de déplacement. Les conditions de l'épure de sont alors également respectées pour ce qui concerne les roues arrière 12AV du véhicule automobile 10.

Dans ce cas, il peut d'ailleurs, s'avérer utile que le mécanisme de transmission latérale synchrone avant 88AV soit coordonnées avec le mécanisme de transmission latérale synchrone arrière 88AR de sorte que les directions d'orientation 64 des rotules d'orientation avant 62AV et des rotules d'orientation arrière 62AR soient strictement antagonistes et satisfasse totalement les conditions de l'épure de Jeantaud.

Les mécanismes de transmission latérale synchrone avant 88AV et arrière 88AR présentent alors, si possible, une symétrie de structure et/ou de fonctionnement.

À l'inverse, il peut également être pertinent d'utiliser un mécanisme de transmission latéral synchrone arrière 88AR générant, sous l'effet du déplacement de l'axe d'entrée 80 du boîtier de direction 70, un déplacement des rotules d'orientation arrière 62AR moins important que le déplacement correspondant des rotules d'orientation avant 62AV généré par le mécanisme de transmission latéral synchrone avant 88AV.

Une telle possibilité peut être obtenue par la réalisation d'un boîtier de direction 70 présentant un axe de sortie avant 82 capable de se déplacer sur une course plus importante que l'axe de sortie arrière 84 sous l'effet d'un même déplacement de l'axe d'entrée 80. Alternativement ou conjointement, cette possibilité peut être obtenue par la réalisation d'un mécanisme de transmission latéral synchrone avant 88AV différent du mécanisme de transmission latéral synchrone arrière 88AR et générant - à translation identique des axes de sortie avant 82 et arrière 84 - un déplacement des rotules d'orientation avant 62AV plus important que le déplacement des rotules d'orientation arrière 62AR.

À titre alternatif ou complémentaire, il peut également être prévu d'employer, pour l'un ou l'autre des mécanisme de transmission latérale synchrone avant 88AV et arrière 88AR, un renvoi mécaniquement variable ou hydrauliquement variable en vue d'adapter les angles de braquages selon des lois prédéterminées.

Il est en outre pertinent de prévoir des mécanismes de transmission latérale synchrone avant 88AV et arrière 88AR réalisés à partir de pièces mécaniques identiques ou similaires, ce qui permet de limiter de manière importante les coûts de production de la structure de direction 60.

Par ailleurs, afin de limiter l'encombrement transversal susceptible d'être généré par ces mécanismes de transmission latérale synchrone avant 88AV et arrière 88AR, l'axe de sortie avant 84 et l'axe de sortie arrière 86 du boîtier de direction 70 peuvent - sans que cela soit nécessaire - être espacés l'un de l'autre d'une distance d'espacement comprise entre 30 % et 60 % de la distance de séparation séparant les rotules d'orientation avant 62AV et arrière 62AR dans la direction longitudinale. Une telle fourchette permet d'obtenir un écartement suffisant de l'axe de sortie avant 84 vis-à-vis de l'axe de sortie arrière 86 pour ne pas que le débattement transversal des mécanismes de transmission latérale synchrone avant 88AV et arrière 88AR n'encombre la zone transversale médiane de la structure de châssis 16.

Les mécanismes de transmission latérale synchrone avant 88AV et arrière 88AR, tels que représentés sur les figures 4a et 4b vont maintenant être décrits.

Selon cette réalisation, les mécanismes de transmission latérale synchrone avant 88AV et arrière 88AR comprennent d'abord un élément d'accouplement 90 relié structurellement et fonctionnellement à l'axe de sortie avant 84 ou arrière 86 du boîtier de direction 70.

Cet élément d'accouplement 90 présente, d'une première part, une portion longitudinale inclinée 92 par rapport à la direction longitudinale DL, d'une deuxième part, une portion coudée 94 prolongeant la portion longitudinale DL et d'une troisième part, une portion transversale inclinée 96 prolongeant la portion coudée 94 et formant bras de levier.

Les mécanismes de transmission latérale synchrone avant 88AV et arrière 88AR comprennent également un module de renvoi latéral synchrone 100 présentant un arbre d'entraînement 102 sur lequel la portion transversale inclinée 96 de l'élément d'accouplement est accouplée.

Les mécanismes de transmission latérale synchrone avant 88AV et arrière 88AR comportent, en outre, deux biellettes de transmission 102 gauche et droite situées de part et d'autre du module de renvoi latéral synchrone 100 par rapport à un plan verticale médian orienté selon la direction longitudinale DL et reliées, respectivement, aux rotules d'orientation avant 62AV.

Ainsi, lorsque l'axe de sortie avant 84 ou arrière 86 du boîtier de direction 70 est déplacé par translation dans la direction d'épanouissement DE, la portion longitudinale inclinée 92 de l'élément d'accouplement 90 est, elle-même, déplacée. Ce déplacement provoque la rotation du bras de levier formé par la portion transversale inclinée 96 autour d'un axe géométrique et entraîne la rotation de l'arbre d'entraînement 102 appartenant au module de renvoi latéral synchrone 100. Le module de renvoi latéral synchrone 100 génère ainsi le déplacement simultanée des biellettes de transmission 102 qui assurent ainsi le déplacement et l'orientation des rotules d'orientation avant 62AV ou arrière 62AR jusqu'à ce qu'elles atteignent, respectivement, la direction d'orientation qui correspondant.

Selon la réalisation des figures 4a et 4b, les portions longitudinales inclinées 92 des éléments d'accouplement 90 appartenant aux mécanismes de transmission latérale synchrone avant 88AV et arrière 88AR s'étendent de part et d'autre du boîtier de direction 70 par rapport par rapport à un plan vertical médian orienté selon la direction longitudinale DL. Toutefois, ces portions longitudinales inclinées 92 pourraient alternativement s'étendre du même coté du boîtier de direction 70 par rapport par rapport au plan vertical médian orienté selon la direction longitudinale DL.

La structure de direction 60 telle que décrite en référence aux modes de réalisation des figures 4a et 4b est positionnées de sorte que le boîtier de direction 70, d'une part, et une partie des mécanismes de transmission latérale synchrone avant 88AV et 88AR, d'autre part, sont protégés par les moyens de rigidification 20 de la structure de châssis 16.

Plus exactement, le boîtier de direction 70 selon l'invention est agencés dans l'espace intérieur protégé 28 de la poutre centrale creuse 22 et les moyens de fixation 74 coopère avec ladite poutre centrale creuse 22 de sorte que le corps rigide 72 est maintenu à demeure à l'intérieur de cet espace intérieur protégé 28.

Par ailleurs, une partie des portions d'accouplement des mécanismes de transmission latérale synchrone avant 88AV et 88AR sont également positionnées dans l'espace intérieur protégé 28 et donc protégées par la poutre centrale creuse 22.

De cette façon, le gain de place obtenu grâce à la mise en oeuvre, d'une part, de la structure de direction selon l'invention et, d'autre part, de la structure de châssis telle que décrite précédemment est optimisé par l'intégration d'une partie des éléments formant la structure de direction à l'intérieure de ladite poutre centrale creuse 22. Cela facilite, notamment, l'intégration des structures de réception 28 dans la structure de châssis en vue d'y intégrer les module de stockage 26 d'énergie électrique.

## Revendications

1. Structure de direction (60) spécialement destinée à assurer l'orientation simultanée de roues avant (12AV) et arrière (12AR) appartenant à un véhicule automobile (10) à propulsion électrique en réponse à la rotation d'une colonne de direction pour autoriser son déplacement le long d'une trajectoire de déplacement, comportant :
deux rotules d'orientation avant (62AV) aptes, d'une part, à être reliées fonctionnellement aux roues avant (12AV) du véhicule automobile (10) de sorte à être disposées en regard l'une de l'autre dans une direction transversale (DT) et, d'autre part, à se déplacer en rotation de manière à orienter lesdites roues avant (12AV) par rapport à une direction longitudinale (DL) perpendiculaire à la direction transversale (DT) ;
deux rotules d'orientation arrière (62AR) aptes, d'une part, à être reliées fonctionnellement aux roues arrière (12AR) du véhicule automobile (10) de sorte à être disposées en regard l'une de l'autre dans la direction transversale (DT) et, d'autre part, à se déplacer en rotation de manière à orienter lesdites roues arrière (12AR) par rapport à la direction longitudinale (DL) ;
un mécanisme de transmission latérale synchrone avant (88AV) apte, d'une part, à être relié structurellement et fonctionnellement aux rotules d'orientation avant (62AV) et, d'autre part, à orienter lesdites rotules d'orientation avant (62AV), de façon synchrone, selon des directions d'orientation (64) de manière à assurer le déplacement du véhicule automobile (10) le long de la trajectoire de déplacement ;
un mécanisme de transmission latérale synchrone arrière (88AR) apte, d'une part, à être relié structurellement et fonctionnellement aux rotules d'orientation arrière (62AR) et, d'autre part, à orienter lesdites rotules d'orientation arrière (62AR), de façon synchrone et selon des directions d'orientation (64) antagonistes aux directions d'orientation (64) des rotules d'orientation avant (62AV) de manière à assurer le déplacement du véhicule automobile (10) le long de la trajectoire de déplacement ;
un boîtier de direction (70) apte à actionner les mécanismes de transmission latérale synchrone avant (88AV) et arrière (88AR) de sorte à générer l'orientation des rotules d'orientation avant (62AV) et arrière (62AR) selon les directions d'orientation (64) ;
**caractérisé en ce que** le boîtier de direction (70) comporte, en premier lieu, un corps rigide (72) creux s'étendant majoritairement selon une direction d'épanouissement (DE) qui coïncide sensiblement avec la direction longitudinale (DL), au niveau d'une zone longitudinale médiane à encombrement transversal réduit, en deuxième lieu, un axe de sortie avant (84) monté mobile dans le corps rigide (72) et relié au mécanisme de transmission latérale synchrone avant (88AV) de manière à assurer, par translation dans la direction d'épanouissement (DE), l'actionnement dudit mécanisme de transmission latérale synchrone avant (88AV) et, en troisième lieu, un axe de sortie arrière (86) monté mobile dans le corps rigide (72), à distance de l'axe de sortie avant (84) dans la direction d'épanouissement (DE) et relié au mécanisme de transmission latérale synchrone arrière (88AR) de manière à assurer, par translation dans la direction d'épanouissement (DE), l'actionnement dudit mécanisme de transmission latérale synchrone avant (88AV) ;
et **en ce que** le boitier de direction (70) est positionné au sein d'une zone transversale médiane de sorte à réduire l'effet de recul de la colonne de direction sous l'effet d'un choc frontal du véhicule automobile (10).

2. Structure de direction (60) de la revendication 1, dans laquelle l'axe de sortie avant (84) et l'axe de sortie arrière (86) sont alignés dans la direction d'épanouissement (DE) du corps rigide (72).

3. Structure de direction (60) selon la revendication 1 ou 2, dans laquelle le boîtier de direction (70) est sensiblement positionné à équidistance des rotules d'orientation avant (62AV) et des rotules d'orientation arrière (62AR) dans la direction longitudinale (DL).

4. Structure de direction (60) selon l'une quelconque des revendications 1 à 3, dans laquelle l'axe de sortie avant (84) et l'axe de sortie arrière (86) sont espacés l'un de l'autre d'une distance d'espacement comprise entre 30 % et 60 % de la distance de séparation séparant les rotules d'orientation avant (62AV) et arrière (62AR) dans la direction longitudinale (DL).

5. Structure de direction (60) selon l'une quelconque des revendications 1 à 4, dans laquelle le boîtier de direction (70) présente également un axe d'entrée (80) monté mobile dans le corps rigide (72) et apte à être relié, directement ou indirectement, à une colonne de direction appartenant au véhicule automobile (10) de sorte que la rotation de cette colonne de direction entraîne le déplacement de l'axe d'entrée (80).

6. Structure de direction (60) selon la revendication 5, dans laquelle l'axe d'entrée (80) est mécaniquement lié aux axes de sortie avant (84) et arrière (86) à l'intérieur du corps rigide (72) de sorte qu'un déplacement de l'axe d'entrée (80) génère un déplacement proportionnel, par translation dans la direction longitudinale (DL), des axes de sortie avant (84) et arrière (86).

7. Structure de direction (60) selon l'une quelconque des revendications 1 à 6, dans laquelle le(s) mécanisme(s) de transmission latérale avant (88AV) et/ou arrière (88AR) comporte(nt) :
un élément d'accouplement (90) relié structurellement et fonctionnellement à l'axe de sortie avant (84) et/ou arrière (86) du boîtier de direction (70) ;
un module de renvoi latéral synchrone (100) actionné par déplacement de l'élément d'accouplement (90) lorsque ledit élément d'accouplement (90) est mis en mouvement par translation, dans la direction longitudinale (DL), de l'axe de sortie avant (84) et/ou arrière (86) du boîtier de direction (70) ; et
deux biellettes de transmission (102) gauche et droite aptes à être reliées, respectivement, aux rotules d'orientation (66AV, 66AR) gauche et droite et actionnées, de façon synchrone, par le mécanisme le module de renvoi latéral synchrone (100).

8. Structure de direction (60) selon la revendication 7, dans laquelle l'élément d'accouplement (90) comporte :
une portion longitudinale inclinée (92) par rapport à la direction longitudinale (DL) et reliée structurellement et fonctionnellement à l'axe de sortie avant (84) et/ou arrière (86) du boîtier de direction (70) et,
une portion coudée (94) prolongeant structurellement et fonctionnellement la portion longitudinale inclinée (92) ; et
une portion transversale inclinée (96) formant bras de levier, prolongeant structurellement et fonctionnellement la portion coudée (94) et étant accouplée au module de renvoi latéral synchrone (100).

9. Structure de direction (60) selon la revendication 8, dans laquelle les portions longitudinales inclinées (92) des éléments d'accouplement (90) appartenant aux mécanismes de transmission latérale synchrone avant (88AV) et arrière (88AR) s'étendent de part et d'autre du boîtier de direction (70) par rapport par rapport à un plan vertical médian orienté selon la direction longitudinale (DL).

10. Structure de direction (60) selon la revendication 6, dans laquelle les portions longitudinales inclinées (92) des éléments d'accouplement (90) appartenant aux mécanismes de transmission latérale synchrone avant (88AV) et arrière (88AR) s'étendent du même coté du boîtier de direction (70) par rapport par rapport à un plan vertical médian orienté selon la direction longitudinale (DL).

11. Structure de direction (60) selon l'une quelconque des revendications 1 à 10, dans laquelle les mécanismes de transmission latérale synchrone avant (88AV) et arrière (88AR) présentent une symétrie de structure et/ou de fonctionnement.

12. Structure de direction (60) selon l'une quelconques des revendications 1 à 11, dans laquelle le mécanisme de transmission latérale synchrone avant (88AV) et/ou arrière comporte, en outre, un renvoi mécaniquement variable ou hydrauliquement variable de manière à adapter les directions d'orientation (64) des rotules d'orientation avant (62AV) et/ou arrière (62AR) selon des lois prédéterminées.

13. Structure de direction (60) selon l'une quelconque des revendications 1 à 12, dans laquelle les rotules d'orientation avant (62AV) et arrière (62AR) et/ou les mécanismes de transmission latérale synchrone avant (88AV) et arrière (88AR) sont réalisés à partir de pièces mécaniques identiques ou similaires.

14. Structure de direction (60) selon l'une quelconque des revendications 1 à 13, dans laquelle le mécanisme de transmission latérale synchrone avant (88AV) est différent du mécanisme de transmission latérale synchrone arrière (88AR) de sorte à obtenir des directions d'orientation (64) des rotules de direction avant (62AV) différentes des directions d'orientation (64) des rotules de direction arrière (62AR).

15. Véhicule automobile (10) à propulsion électrique comportant une structure de châssis (16) et une structure de direction (60) selon l'une quelconque des revendications 1 à 14, dans lequel le boîtier de direction (70) est fixé à demeure sur la structure de châssis (16) et orienté de sorte que la direction d'épanouissement (DE) du corps rigide (72) coïncide sensiblement avec la direction longitudinale (DL) de la structure de châssis (16).

16. Véhicule automobile (10) selon la revendication 15, dans lequel la structure de châssis (16) comporte également :
un train avant (12Av) et un train arrière (12AR) s'étendant dans une direction transversale (DT) sensiblement perpendiculaire à la direction longitudinale (DL) ;
des moyens de rigidification (20), formés par une poutre centrale creuse (22), qui relie structurellement et fonctionnellement le train avant (12AV) au train arrière (12AR) de manière à assurer la rigidité de la structure de châssis (16) et à supporter la majeure partie des contraintes de séparation des trains avant (12AV) et arrière (12AR) du véhicule automobile (10) ;
le boîtier de direction (70) étant supporté directement ou indirectement par ladite poutre centrale creuse (22) formant les moyens de rigidification (20).

17. Véhicule automobile (10) selon la revendication 16, dans lequel poutre centrale creuse (22) définit un espace intérieur (28) protégé à l'intérieur duquel est supporté et protégé le boîtier de direction (70).
